# EUROPÄISCHE PATENTSCHRIFT

(11) **EP 1 623 893 B1**
(45) Veröffentlichungstag und Bekanntmachung des Hinweises auf die Patenterteilung: **27.02.2008**
(21) Anmeldenummer: 05016937.4
(22) Anmeldetag: 04.08.2005
(51) Int. Cl.: B60R 25/00, E05B 49/00, G07C 9/00

(54) **Schliesssystem, insbesondere für ein Kratffahrzeug**
Locking system, in particular for a motor vehicle.
Système de verrouillage, notamment pour véhicule à moteur

(30) Priorität: 05.08.2004 DE 102004037884
(43) Veröffentlichungstag der Anmeldung: 08.02.2006
(73) Patentinhaber: Marquardt GmbH, 78604 Rietheim-Weilheim (DE)
(72) Erfinder: Hipp, Uwe, 72514 Engelswies (DE); Stehle, Wolfgang, 78603 Renquishausen (DE); Vogler, Klaus-Peter, 78567 Fridingen (DE); Mattes, Johannes, 78567 Fridingen (DE)
(74) Vertreter: Otten, Herbert

(56) Entgegenhaltungen:
- EP-A- 0 980 800
- EP-A- 1 331 147
- WO-A-02/18172
- DE-A1- 10 202 330

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für Signale, die insbesondere mittels einer elektromagnetischen Trägerwelle übertragen werden. Insbesondere ist im bestimmungsgemäßen Betrieb zwischen dem Schlüssel und der Steuereinrichtung wenigstens ein Signal als codiertes Betriebssignal zur Authentikation des Schlüssels übertragbar, so dass nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Ein Schließsystem mit Keyless-Funktionalität ist aus der EP 0 980 800 A2 bekannt. Das Schließsystem umfasst eine im Kraftfahrzeug befindliche Sende- und Empfangseinheit mit Antennen und einen tragbaren Codegeber. Zur Authentikation des Codegebers wird ein Betriebssignal zwischen der Sende- und Empfangseinheit und dem Codegeber übertragen, wobei das Betriebssignal aus einem von der Sende- und Empfangseinheit gesendeten Fragesignal sowie einem vom Codegeber zurückgesandten Antwortsignal besteht. Das Fragesignal wird mehrfach mit geänderter Sendeleistung oder über verschiedene Antennen ausgesendet. Der Codegeber besitzt eine Messeinrichtung zur Messung der Empfangsleistung für das Fragesignal. Der mittels der Messeinrichtung ermittelte Wert für die Empfangsleistung wird dem Antwortsignal hinzugefügt. Zur Erhöhung der Diebstahlsicherheit wird das Antwortsignal im Hinblick auf die veränderte Empfangsleistung ausgewertet, da gleichbleibende Antwortsignale auf einen manipulierten Codegeber hindeuten.

Für die Keyless-Funktionalitäten muss ermittelt werden, wo sich die zweite Einrichtung befindet. Beispielsweise muss der Schlüssel für das Entriegeln und/oder Verriegeln der Autotüren des Kraftfahrzeugs in dessen "Außenbereich" befindlich sein. Befindet sich hingegen der Schlüssel im "Innenbereich" des Kraftfahrzeugs, so bleiben die Autotüren entriegelt. Zur Plausibilitätskontrolle wird zwar die Empfangsleistung bestimmt, eine Ortsbestimmung für den Codegeber erfolgt jedoch bei dem Schließsystem nach der EP 0 980 800 A2 nicht.

Weitere Schließsysteme sind aus der EP 1 331 147 A2, der DE 102 02 330 A1 sowie der WO 02/18172 A1 bekannt. So erfolgt bei dem Schließsystem mit Keyless-Funktionalität gemäß der EP 1 331 147 A2 ein periodisches Scannen nach dem zugehörigen Codegeber, wobei die Scan-Rate während des Nichtgebrauchs des Schließsystems zur Energie-Einsparung herabgesetzt wird. Bei dem Schließsystem mit Keyless-Funktionalität nach der DE 102 02 330 A1 wird zur Standortbestimmung für den Codegeber eine Messung der Feldstärke eines Bereichsabgrenzungssignals vorgenommen. Bei dem mit einem fernbedienbaren Türschließsystem ausgestatteten Kraftfahrzeug nach der WO 02/18172 A1 kann schließlich eine Autotüre mittels eines Türmotors geöffnet oder geschlossen werden.

Zur Standortbestimmung für die Keyless-Funktionalität kann die erste Einrichtung ein Signal in der Art eines Bereichsabgrenzungssignals senden, derart dass die zweite Einrichtung deren Standort in Bezug auf die erste Einrichtung am und/oder im Kraftfahrzeug bestimmen kann. Das Senden des Bereichsabgrenzungssignals kann wiederum dann ausgelöst werden, wenn der Türgriff durch den Benutzer betätigt wird. Nachteilig sind hier die erforderlich kurzen Reaktionszeiten des Schließsystems zum Entriegeln der Autotüren, was das Schließsystem entsprechend verteuert. Des Weiteren wird eine automatische Türöffnung nach Entriegeln der Autotüre nicht vorgenommen, was aus Gründen des Komforts für den Benutzer jedoch wünschenswert ist.

Der Erfindung liegt die Aufgabe zugrunde, den Komfort für das mit "Keyless"-Funktionalität ausgestattete Schließsystem zu steigern.

Diese Aufgabe wird bei einem gattungsgemäßen Schließsystem durch die kennzeichnenden Merkmale des Anspruchs 1 gelöst.

Beim erfindungsgemäßen Schließsystem besitzt die erste Einrichtung eine Betriebsart, in der diese das Bereichsabgrenzungssignal periodisch sendet. In dieser Betriebsart kann die erste Einrichtung ständig befindlich sein. Ebenso gut ist es möglich, dass diese Betriebsart vom Benutzer aktiviert und/oder deaktiviert wird. Das periodische Senden des Bereichsabgrenzungssignals in dieser Betriebsart wirkt derart, dass bereits die Annäherung der zweiten Einrichtung an das Kraftfahrzeug und/oder die Entfernung der zweiten Einrichtung vom Kraftfahrzeug und/oder die Veränderung der Position der zweiten Einrichtung in Bezug auf das Kraftfahrzeug detektierbar ist. Dadurch wird schon die Annäherung und/oder Entfernung des Identifikationsgebers erkannt und dieser kann dann weiter verfolgt werden, so dass sich wiederum die Keyless-Funktionalitäten mit dementsprechenden Aktionen unter vorteilhafter Erhöhung des Komforts gezielt auslösen lassen. Die Detektion der Annäherung der zweiten Einrichtung an das Kraftfahrzeug und/oder die Entfernung der zweiten Einrichtung vom Kraftfahrzeug erfolgt in einer ersten Phase während des Betriebs des Schließsystems. Die Detektion des Übergangs der zweiten Einrichtung in den Innenbereich und/oder des Verlassens des Innenbereiches des Kraftfahrzeugs erfolgt in einer zweiten Phase während des Betriebs des Schließsystems. Die Detektion der zweiten Einrichtung im Innenbereich und/oder im Grenzbereich des Kraftfahrzeugs erfolgt schließlich in einer dritten Phase während des Betriebs des Schließsystems.

Insbesondere ist hierbei herauszustellen, dass das auf einer automatischen Erkennung des Identifikationsgebers ohne willentliche Betätigung desselben basierende Zugangs- und/oder Fahrberechtigungssystem einen sich annähernden und/oder entfernenden Identifikationsgeber zu erkennen, zu verfolgen und dementsprechend Aktionen auszulösen vermag. Der Ansatz zur Lösung dieser Anforderungen liegt dann in der Aufteilung der Problemstellung in die drei genannten Phasen. Jede Phase ist gekennzeichnet durch ein optimales Verhältnis von erfasstem Fahrzeugbereich und Überwachungszeitdauer, wodurch trotz gesteigerter Funktionalität und erhöhtem Komfort eine Optimierung des Energieverbrauchs erzielt wird.

Weitere Ausgestaltungen der Erfindung sind Gegenstand der Unteransprüche.

In weiterer Ausgestaltung wird nach Aussenden des Bereichsabgrenzungssignals der Standort der zweiten Einrichtung in Bezug auf die erste Einrichtung am und/oder im Kraftfahrzeug anschließend mit einem Rückantwortsignal von der zweiten zur ersten Einrichtung gesendet. Bedarfsgerecht wird schließlich die Authentikation der zweiten Einrichtung mittels weiterer Signale als codierte Betriebssignale durchgeführt, so dass nach positiver Auswertung des übertragenen Betriebssignals bei berechtigter zweiter Einrichtung eine Änderung des Zustandes der ersten Einrichtung bewirkbar ist. Das der Authentikation dienende elektromagnetische Betriebssignal kann in einer die Diebstahlsicherheit erhöhenden bidirektionalen Kommunikation, bestehend aus mehreren Teilsignalen, zwischen der ersten und der zweiten Einrichtung übertragen werden.

Besonders bevorzugt ist, für das Bereichsabgrenzungssignal ein induktives Signal zu verwenden, indem die Trägerwelle für dieses Signal eine im induktiven, niederfrequenten (NF-)Bereich liegende Frequenz aufweist. Aufgrund der begrenzten Reichweite eines induktiven Signals lässt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz betragen.

Zweckmäßigerweise besitzt hierfür die erste Einrichtung mehrere induktive Sender beziehungsweise als induktive Sender dienende Spulen und die zweite Einrichtung einen induktiven Empfänger. So kann, insbesondere wenn es sich bei dem Kraftfahrzeug um eine Art von Transporter handelt, die erste Einrichtung wenigstens sechs induktive Sender beziehungsweise als induktive Sender dienende Spulen besitzen. Davon sind zwei induktive Sender dem Innenbereich beziehungsweise dem Laderaum des Kraftfahrzeugs zugeordnet. Die erste Einrichtung besitzt je einen weiteren, der fahrerseitigen Autotüre des Kraftfahrzeugs sowie der beifahrerseitigen Autotüre zugeordneten induktiven Sender. Schließlich ist noch je ein induktiver Sender in der linken sowie der rechten Laderaumtür angeordnet.

In der ersten Phase werden zwei Antennen verwendet, nämlich je eine an der linken sowie der rechten Seite des Kraftfahrzeugs in den Laderaumtüren optimal positionierte Antenne. Bei fehlender zweiter Einrichtung, d.h. der Benutzer befindet sich außerhalb des Wirkbereichs für das Schließsystem, kann die Zykluszeit für das periodische Senden des Bereichsabgrenzungssignals im Verlaufe der Betriebszeit zur Energieeinsparung vergrößert werden. In diesem Falle erfolgt nach einer gewissen Zeit die vollständige Deaktivierung für das Senden des Bereichsabgrenzungssignals.

Für die zweite Phase ist eine erweiterte Konfiguration der Antennen vorgenommen, und zwar werden zwei Antennen im Innenbereich des Kraftfahrzeugs, verwendet. Falls gewünscht kann auch die Zykluszeit für das periodische Senden des Bereichsabgrenzungssignals bedarfsgerecht geändert werden.

In der dritten Phase werden alle Antennen verwendet. Neben der anderen Antennenzusammenschaltung kann auch ein anderes, bedarfsgerechtes Tastverhältnis für das Senden durch die Antennen gewählt werden. Durch eine spezielle Antennenanordnung wird ein Grenzbereich erzeugt, der aus anderen Feldkonstellationen resultiert. Durch diesen erweiterten Innenbereich kann dann die Zykluszeit für das periodische Senden des Bereichsabgrenzungssignals erhöht werden, was dem Energiehaushalt für das Schließsystem zugute kommt.

Zur Bestimmung des Standorts wird in der zweiten Einrichtung die Feldsituation für die empfangenen Bereichsabgrenzungssignale ausgewertet. In einfacher und kostengünstiger Weise ist hierzu in der zweiten Einrichtung ein Mittel zur Messung der Feldstärke des von der ersten Einrichtung übertragenen Bereichsabgrenzungssignals angeordnet. Die Standortbestimmung kann dann anhand der gemessenen Intensitäten der Bereichsabgrenzungssignale erfolgen.

Zweckmäßigerweise ist das Mittel zur Messung der Feldstärke als ein integrierter Baustein ausgestaltet. Dieser Baustein erzeugt ein in funktioneller Abhängigkeit zur gemessenen Feldstärke stehendes sogenanntes RSSI(Radio Signal Strength Indicator)-Signal, das dann in einfacher Weise zur eigentlichen Standortbestimmung herangezogen werden kann. Besonders geeignet zur Weiterverarbeitung des RSSI-Signals ist ein Mikroprozessor, wobei es sich dabei um den in der zweiten Einrichtung für deren Betrieb bereits vorhandenen Mikroprozessor handeln kann. Das RSSI-Signal selbst kann beispielsweise in proportionaler oder logarithmischer Abhängigkeit zur gemessenen Feldstärke stehen.

Um eine einfache und schnelle Arbeitsweise für die Standortbestimmung zu gewährleisten, lässt sich ein Schwellwert in der zweiten Einrichtung festlegen. Dann können die aus den Bereichsabgrenzungssignalen erzeugten RSSI-Signale jeweils mit dem Schwellwert verglichen werden. Somit lässt sich dann aufgrund dieser Größenvergleiche und/oder mittels logischer, insbesondere boole'scher Verknüpfungen der Ergebnisse dieser Vergleiche der Standort bestimmen. Der Schwellwert kann gewünschtenfalls variabel in die zweite Einrichtung einschreibbar sein, um so eine einfache Anpassung an andere Fahrzeugtypen zu gestatten. Falls gewünscht, kann der Sender für das Bereichsabgrenzungssignal zur Standortbestimmung mit unterschiedlicher Leistung angesteuert werden. Schließlich läßt sich auch noch eine Art von Hysterese für das Öffnen und/oder Schließen der Autotüren, Laderaumtüren o. dgl. einsetzen, um Fehlauslösungen und/oder ungewolltes Betätigen im Grenzbereich zu verhindern.

In weiterer Ausgestaltung können die Laderaumtüren als Schiebetüren ausgebildet sein. Die Laderaumtüren sind dann zweckmäßigerweise mittels eines Elektromotors bewegbar. In besonderer Steigerung des Komforts erfolgt dann das Öffnen und/oder Schließen der Laderaumtüren entsprechend der KeylessEntry-Funktionalität bei Annäherung der zweiten Einrichtung an das Kraftfahrzeug und/oder Entfernung der zweiten Einrichtung vom Kraftfahrzeug, d.h. wenn der den Identifikationsgeber bei sich tragenden Benutzer sich dem Kraftfahrzeug annähert und/oder sich vom Kraftfahrzeug entfernt, elektromotorisch.

Die mit der Erfindung erzielten Vorteile bestehen insbesondere darin, daß der Standort der zweiten Einrichtung in Bezug auf die erste Einrichtung frühzeitig bestimmt und für die Ausführung der Keyless-Funktionalitäten berücksichtigt werden kann. Beispielsweise ist nicht nur ein Entriegeln und/oder Verriegeln sondern auch ein automatisches Öffnen und/oder Verschließen der Fahrzeugtüren möglich. Somit arbeitet das Schließsystem zuverlässig, funktions- sowie betriebssicher und bietet einen erhöhten Komfort für den Benutzer. Zudem ist das Schließsystem manipulationssicher und fehlertolerant, was die Diebstahlsicherheit sowie den Mißbrauchsschutz für das Kraftfahrzeug erhöht. Trotz dieser Verbesserungen ist das Schließsystem kostengünstig herzustellen. Außerdem bietet die erfindungsgemäße Lösung ein stromsparendes Konzept und durch die optimale Kombination von Antennenkonfiguration und Abtastzyklus ist für jede Phase immer die beste Systemperformance gegeben.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein mit einem Schließsystem ausgestattetes Kraftfahrzeug entsprechend einem ersten Ausführungsbeispiel,
- Fig. 2: ein schematisches Blockschaltbild für das Schließsystem im Kraftfahrzeug entsprechend einem zweiten Ausführungsbeispiel und
- Fig. 3: ein schematisches Blockschaltbild des ID-Gebers mit einem Diagramm zur Übertragung der Signale.

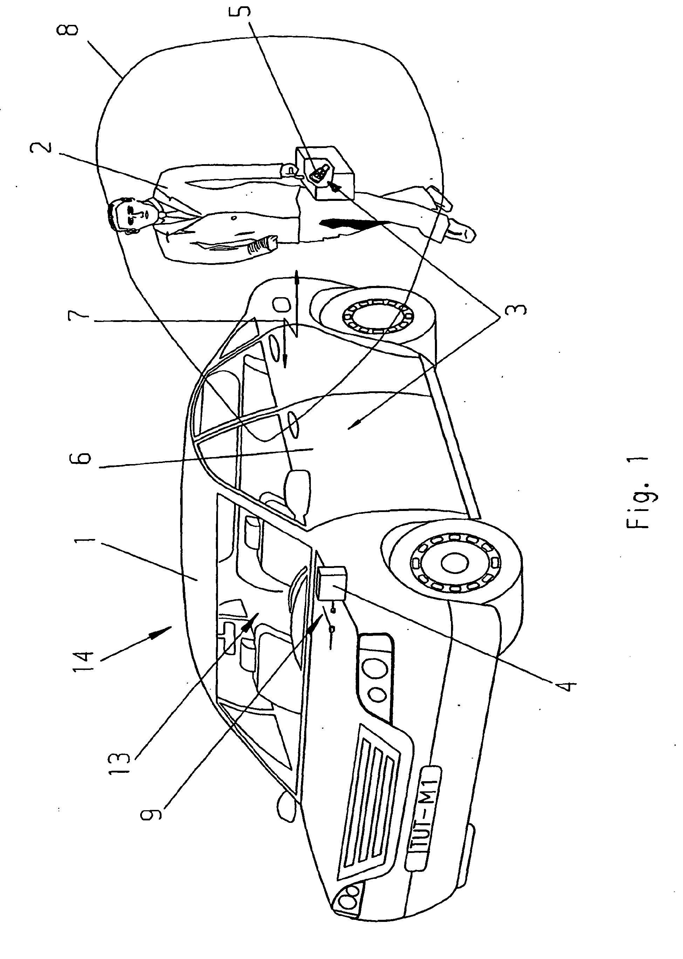

In Fig. 1 ist ein als Personenwagen ausgebildetes Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

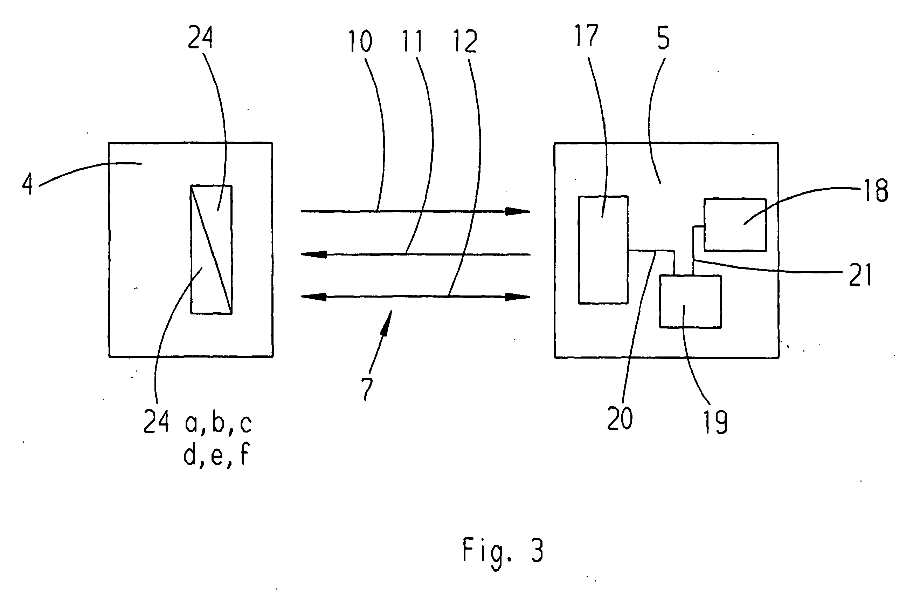

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal 12 (siehe Fig. 3). Das codierte Betriebssignal 12 dient zur Authentikation der zweiten Einrichtung 5, womit bei berechtigter zweiter Einrichtung 5 nach positiver Auswertung des übertragenen Betriebssignals 12 eine Änderung des Zustandes der ersten Einrichtung 4 bewirkbar ist. Die Übertragung des codierten Betriebssignals 12 erfolgt selbsttätig ohne Mitwirkung des Benutzers 2 dann, wenn der berechtigte Benutzer 2 sich dem Kraftfahrzeug 1 annähert, also sobald der berechtigte Benutzer 2 den Wirkbereich 8 betritt. Dadurch wird die Entriegelung der Autotüren 6, der Heckklappe o. dgl. entsprechend der KeylessEntry-Funktionalität ausgelöst. Schließt der Benutzer die Autotüren 6 von außen und verläßt dann den Wirkbereich 8, so erfolgt eine selbsttätige Verriegelung der Autotüren 6.

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses oder der Lenkradverriegelung, die jedoch vorliegend nicht weiter gezeigt sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 12 zur Authentikation der zweiten Einrichtung 5 erfolgt dann, wenn der berechtigte Benutzer 2 sich im Kraftfahrzeug 1 befindet und einen in Fig. 1 schematisch angedeuteten Start/Stop- Schalter 9, der am Gangwahlhebel, am Zündschloß, im Armaturenbrett, in der Mittelkonsole o. dgl. im Kraftfahrzeug 1 angeordnet sein kann, betätigt. Dadurch wird der Start-Vorgang o. dgl. des Kraftfahrzeugs 1 entsprechend der KeylessGo-Funktionalität ausgelöst.

Die Funktionsweise des erfindungsgemäßen Schließsystems 3 soll nun anhand der Fig. 3 näher erläutert werden. Zunächst wird das Schließsystem 3 vom Benutzer 2 mittels der zweiten Einrichtung 5 in der Art eines Funkschlüssels, beispielsweise mittels eines Signals 7, für den nachfolgenden bestimmungsgemäßen Betrieb aktiviert. Im bestimmungsgemäßen Betrieb sendet die erste Einrichtung 4 mittels eines Senders/Empfängers 24 als Mittel zum Senden und/oder Empfangen von Signalen ein elektromagnetisches Signal 10, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie gegebenenfalls an welcher Stelle des Außenraums 14 und/oder im Innenraum 13 des Kraftfahrzeugs 1 befindlich ist. Nachfolgend sendet die zweite Einrichtung 5 mittels eines Senders/Empfängers 17 ein die Information zum ermittelteten Standort beinhaltendes Signal 11 zur ersten Einrichtung 4, das im folgenden auch als Rückantwortsignal bezeichnet ist. Schließlich wird bei Bedarf, wie bereits beschrieben, das codierte elektromagnetische Betriebssignal 12 zur Authentikation mittels der Sender/Empfänger 24, 17 zwischen der ersten und der zweiten Einrichtung 4, 5 übertragen. Das Betriebssignal 12 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen. Während des bestimmungsgemäßen Betriebs sendet die erste Einrichtung 4 das Bereichsabgrenzungssignal 10 periodisch. Dadurch ist die Annäherung der zweiten Einrichtung 5 an das Kraftfahrzeug 1 und/oder die Entfernung der zweiten Einrichtung 5 vom Kraftfahrzeug 1 und/oder die Veränderung der Position der zweiten Einrichtung 5 in Bezug auf das Kraftfahrzeug 1 detektierbar. Infolge dieser Detektion kann dann die entsprechende Funktion, wie das Ent- und/oder Verriegeln der Autotüren 6 oder Sonstiges, vom Schließsystem 3 ausgelöst werden. Im übrigen kann bei Bedarf von der ersten Einrichtung 4 vor Aussenden des Bereichsabgrenzungssignals 10 noch ein nicht weiter gezeigtes Wecksignal gesendet werden, das die zweite Einrichtung 5 von einem energiesparenden Ruhezustand in den betriebsbereiten Zustand überführt.

Besonders bevorzugt ist, daß die Trägerwelle für das Bereichsabgrenzungsignal 10 eine im induktiven (NF-)Bereich liegende Frequenz aufweist. Insbesondere kann diese Frequenz in etwa 20 kHz betragen. Vorteilhafterweise weist ein solches induktives Signal bereits eine begrenzte Reichweite auf. Dadurch wird erreicht, daß die zweite Einrichtung 5 lediglich dann aktiviert ist, wenn sie im Innenraum 13 des Kraftfahrzeugs 1 oder in einem der Wirkbereiche 8 im Außenraum 14 am Kraftfahrzeug 1 befindlich ist, womit Störungen und/oder Sicherheitslücken durch Überreichweiten vermieden sind. In diesem Fall können zum einen Spulen als dem Kraftfahrzeug 1 zugeordnete, induktive Sender 24 verwendet werden und zum anderen besitzt die zweite Einrichtung 5 einen induktiven Empfänger 17.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals 7 angeordnet. Das Mittel 19 zur Messung der Feldstärke mißt die Feldstärke beziehungsweise die Intensität eines der übertragenen Signale, und zwar des Bereichsabgrenzunssignals 10. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 10 und erzeugt an seinem RSSI-Ausgang 21 ein in funktioneller Abhängigkeit zur Feldstärke des Signals 10 stehendes RSSI-Signal. Beispielsweise kann das RSSI-Signal proportional oder logarithmisch zur Feldstärke des Signals 10 abhängig sein. Mit Hilfe der Größe des RSSI-Signals läßt sich der Standort der zweiten Einrichtung 5 ermitteln, wie nachfolgend noch näher erläutert ist.

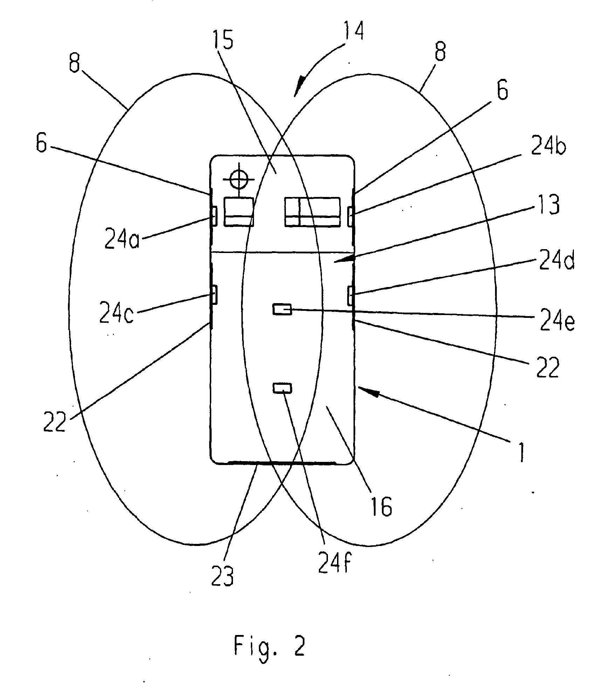

Entsprechend einem weiteren Ausführungsbeispiel ist in Fig. 2 ein als Lieferwagen ausgebildetes Kraftfahrzeug 1 gezeigt. Beispielsweise handelt sich hier um ein Kraftfahrzeug 1 zur Paketauslieferung, das zusätzlich zu den Autotüren 6 für die Fahrerkabine 15 noch seitliche Schiebetüren 22 sowie eine Hecktüre 23 für den Laderaum 16 besitzt. Die Schiebetüren 22 sind mit einer KeylessEntry-Funktionalität versehen, so daß diese selbsttätig ent- und/oder verriegelbar sowie zum Öffnen und/oder Schließen mittels Elektromotoren bewegbar sind. Diese KeylessEntry-Funktionalität für den Laderaum 16 kann beispielsweise nach entsprechender Aktivierung durch den Benutzer 2 wirksam sein sowie vom Benutzer 2 bei Nichtgebrauch auch wieder deaktivierbar sein.

Zur Standortbestimmung unter Verwendung des RSSI-Signals enthält die erste Einrichtung 4 wenigstens wenigstens sechs induktive Sender 24a, 24b, 24c, 24d, 24e, 24f beziehungsweise als induktive Sender dienende Spulen mit zugehörigen Empfängern, wie in Fig. 2 zu sehen ist. Diese sechs Sender 24a, 24b, 24c, 24d, 24e, 24f sind verschiedenen Bereichen beziehungsweise Seiten des Kraftfahrzeugs 1 zugeordnet. Und zwar befindet sich der Sender 24a in der fahrerseitigen und der Sender 24b in der beifahrerseitigen Autotüre 6 zur Fahrerkabine 15. Desweiteren befinden sich die Sender 24c, 24d in den Schiebetüren 22, also in der linken und/oder rechten Laderaumtür, und die Sender 24e, 24f im Innenraum 13 des Kraftfahrzeugs 1, und zwar im Besonderen im Laderaum 16. Ausgewählte einzelne dieser Sender 24a, 24b, 24c, 24d, 24e, 24f oder bei Bedarf auch alle Sender 24a, 24b, 24c, 24d, 24e, 24f der ersten Einrichtung 4 senden nacheinander jeweils ein Bereichsabgrenzungssignal 10. Diese nacheinander gesendeten Bereichsabgrenzungssignale 10 werden dann vom Sender/Empfänger 17 der zweiten Einrichtung 5 empfangen und es werden daraus entsprechende RSSI-Signale gebildet. Diese am RSSI-Ausgang 21 anliegenden RSSI-Signale der von den jeweiligen Sendern 24a, 24b, 24c, 24d, 24e, 24f empfangenen Signale 10 werden dann zur Standortbestimmung der zweiten Einrichtung 5 mit Hilfe des Mikroprozessors 18 verwendet. Hierzu ist ein Schwellwert S in der zweiten Einrichtung 5 festgelegt. Der Schwellwert S für das Öffnen und/oder Schließen kann entsprechend den Bedürfnissen und Gegebenheiten variabel wählbar und in die zweite Einrichtung 5 einschreibbar sein. Dies hat den Vorteil, daß das Schließsystem 3 sehr leicht an andere Fahrzeugtypen adaptierbar ist. Die RSSI-Signale der Bereichsabgrenzungssignale 10 werden dann mit dem Schwellwert S verglichen und es kann dann mittels lediglich logischer, insbesondere boole'scher Verknüpfungen der Ergebnisse dieser Vergleiche der Standort der zweiten Einrichtung 5 in einfacher Art und Weise bestimmt werden.

In einer ersten Phase im bestimmungsgemäßen Betrieb des Schließsystems 3 werden zur Detektion der Annäherung der zweiten Einrichtung 5 an das Kraftfahrzeug 1 und/oder der Entfernung der zweiten Einrichtung 5 vom Kraftfahrzeug 1 zwei Antennen 24 verwendet. Es handelt sich dabei um je eine optimal an der linken sowie der rechten Seite des Kraftfahrzeugs 1 positionierte Antenne 24, und zwar um die Antennen 24c, 24d in den Schiebetüren 22 zum Laderaum 16, die entsprechend zyklisch angesteuert werden. Nähert sich der Benutzer 2 dem Kraftfahrzeug 1, so werden die Schiebetüren 22 für den Zugang zum Laderaum 16 entriegelt und elektromotorisch geöffnet. Entfernt sich der Benutzer 2 vom Kraftfahrzeug 1, so werden die Schiebetüren 22 zum Laderaum 16 elektromotorisch geschlossen und wieder verriegelt. Gewünschtenfalls kann auch die Hecktüre 23 in dieser Art und Weise betätigbar sein. Bei fehlender zweiter Einrichtung 5, beispielsweise weil der Benutzer 2 ein Paket in ein Haus ausliefert und sich deshalb außerhalb des Wirkbereichs 8 befindet, wird die Zykluszeit für das periodische Senden des Bereichsabgrenzungssignals 10 im Verlaufe der Betriebszeit des bestimmungsgemäßen Betriebs vergrößert, um so eine Energieeinsparung zu erzielen. Die Vergrößerung der Zykluszeit geht hin bis zur vollständigen Deaktivierung für das Senden des Bereichsabgrenzungssignals 10, beispielsweise weil der Benutzer 2 die Auslieferung der Pakete beendet hat.

In einer zweiten Phase im bestimmungsgemäßen Betrieb des Schließsystems 3 wird zur Detektion des Übergangs der zweiten Einrichtung 5 vom Außenraum 14 in den Innenraum 13 eine erweiterte Konfiguration der Antennen 24 verwendet. Und zwar werden die zwei Antennen 24e, 24f im Innenbereich 13 des Kraftfahrzeugs 1 verwendet. Das Schließsystem 3 erkennt nun, daß der Benutzer 2 von außen in den Laderaum 16 geht, beispielsweise um ein Paket zu holen, womit die Schiebetüren 22 offen bleiben. Danach wird dann entsprechend der unten beschriebenen dritten Phase die zweite Einrichtung 5 im Laderaum 16 weiterverfolgt. Ebenso kann mit Hilfe der Antennen 24e, 24f erkannt werden, wenn der Benutzer 2 den Laderaum 16 wieder verläßt, wobei ein Verschließen der Schiebetüren 22 verhindert ist. Wiederum kann auch die Zykluszeit für das periodische Senden des Bereichsabgrenzungssignals 10 entsprechend angepaßt werden.

In einer dritten Phase im bestimmungsgemäßen Betrieb des Schließsystems 3 werden zur Detektion der zweiten Einrichtung im Innenbereich 13 und/oder im Grenzbereich des Kraftfahrzeugs 1 alle Antennen 24a, 24b, 24c, 24d, 24e, 24f verwendet. Aufgrund der anderen Antennenzusammenschaltung und des anderen Tastverhältnisses der speziellen Antennenanordnung wird ein Grenzbereich erzeugt, der aus anderen Feldkonstellationen resultiert. Aufgrund dieses erweiterten Innenbereichs 13 läßt sich die zweite Einrichtung 5 sicher im gesamten Laderaum 16 verfolgen, beispielsweise weil der Benutzer 2 das Paket im Laderaum 16 sucht. Dabei kann sogar die Zykluszeit für das periodische Senden des Bereichsabgrenzungssignals 10 erhöht werden, was wiederum dem Energiehaushalt zugute kommt. Solange sich der Benutzer 2 im Laderaum 16 befindet, ist zumindest ein Verriegeln der Schiebetüren 22 verhindert.

Schließlich können die Sender 24a, 24b, 24c, 24d, 24e, 24f für das Senden des Bereichsabgrenzungssignals 10, das zur Standortbestimmung dient, mit unterschiedlicher Leistung angesteuert werden. In den jeweiligen Phasen erfolgt somit eine optimale Ansteuerung der Antennen sowie der Zykluszeit für die Antennen, was zur Energieeinsparung beiträgt. Um Fehlauslösungen im Grenzbereich zu vermeiden, arbeitet das Schließsystem mit einer Hysteresefunktion für das Öffnen sowie das Schließen der Schiebetüren 22, wodurch ein ungewolltes Betätigen verhindert ist.

Die Erfindung ist nicht auf die beschriebenen und dargestellten Ausführungsbeispiele beschränkt. Sie umfaßt vielmehr auch alle fachmännischen Weiterbildungen im Rahmen der Schutzrechtsansprüche. So kann ein derartiges Schließsystem nicht nur im Personen- und/oder Nutzkraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Start/Stop-Schalter
- 10:: Signal / Bereichsabgrenzungssignal
- 11:: Signal / Rückantwortsignal
- 12:: Signal / (codiertes) Betriebssignal
- 13:: Innenraum / Innenbereich
- 14:: Außenraum
- 15:: Fahrerkabine
- 16:: Laderaum
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Schiebetüre / Laderaumtüre
- 23:: Hecktüre
- 24:: Sender/Empfänger (in der ersten Einrichtung)
- 24a,b:: Sender / Antenne (in Autotüre)
- 24c,d:: Sender / Antenne (in Schiebetüre)
- 24e,f:: Sender / Antenne (im Innenbereich)

## Patentansprüche

1. Schließsystem, insbesondere für die Zugangsberechtigung bei einem Kraftfahrzeug (1) in der Art einer KeylessEntry-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), der Heckklappe, der Hecktüre (23) o. dgl., und mit einer zugehörigen, in der Art eines elektronischen Schlüssels, eines ID-Gebers, einer Chipkarte o. dgl. ausgebildeten zweiten Einrichtung (5), wobei die beiden Einrichtungen (4, 5) zu deren bestimmungsgemäßen Betrieb Antennen (24a, 24b, 24c, 24d, 24e, 24f) aufweisende Sender und/oder Empfänger (24, 17) für insbesondere elektromagnetische Signale (7) besitzen, und wobei mittels Signale (7) die Annäherung der zweiten Einrichtung (5) an das Kraftfahrzeug (1) und/oder die Entfernung der zweiten Einrichtung (5) vom Kraftfahrzeug (1) und/oder die Veränderung der Position der zweiten Einrichtung (5) in Bezug auf das Kraftfahrzeug (1) detektierbar ist, **dadurch gekennzeichnet, daß** die erste Einrichtung (4) wenigstens ein Signal (10) in der Art eines Bereichsabgrenzungssignals sendet, derart dass die zweite Einrichtung (5) deren Standort in Bezug auf die erste Einrichtung (4), insbesondere am und/oder im Kraftfahrzeug (1) bestimmen kann, dass die erste Einrichtung (4) in einer Betriebsart das Bereichsabgrenzungssignal (10) periodisch sendet, dass in einer ersten Phase zur Detektion der Annäherung der zweiten Einrichtung (5) an das Kraftfahrzeug (1) und/oder der Entfernung der zweiten Einrichtung (5) vom Kraftfahrzeug (1) zwei Antennen (24c, 24d), und zwar je eine an der linken sowie der rechten Seite des Kraftfahrzeugs (1) verwendet werden, dass in einer zweiten Phase zur Detektion des Übergangs der zweiten Einrichtung (5) in den Innenbereich (13) und/oder des Verlassens des Innenbereiches (13) des Kraftfahrzeugs (1) zwei Antennen (24e, 24f) im Innenbereich (13) des Kraftfahrzeugs (1) verwendet werden, und daß in einer dritten Phase zur Detektion der zweiten Einrichtung (5) im Innenbereich (13) und/oder im Grenzbereich des Kraftfahrzeugs (1) alle Antennen (24a, 24b, 24c, 24d, 24e, 24f) verwendet werden.

2. Schließsystem nach Anspruch 1, **dadurch gekennzeichnet, daß** nach Aussenden des Bereichsabgrenzungssignals (10) nachfolgend die zweite Einrichtung (5) ein den Standort beinhaltendes Rückantwortsignal (11) zur ersten Einrichtung (4) sendet, und daß vorzugsweise ein weiteres elektromagnetisches Signal (12) zwischen der zweiten Einrichtung (5) und der ersten Einrichtung (4) als ein codiertes Betriebssignal zur Authentikation der zweiten Einrichtung (5) übertragen wird, so daß nach positiver Auswertung des übertragenen Betriebssignals (12) bei berechtigter zweiter Einrichtung (5) eine Änderung des Zustandes der ersten Einrichtung (4) bewirkbar ist, wobei das der Authentikation dienende Betriebssignal (12) bevorzugterweise in einer bidirektionalen Kommunikation bestehend aus mehreren Teilsignalen zwischen der ersten und der zweiten Einrichtung (4, 5) übertragen wird.

3. Schließsystem nach Anspruch 1 oder 2, **dadurch gekennzeichnet, daß** die Trägerwelle für das Bereichsabgrenzungssignal (10) eine im induktiven, niederfrequenten (NF-)Bereich liegende Frequenz, die insbesondere in etwa 20 kHz beträgt, aufweist.

4. Schließsystem insbesondere nach Anspruch 1, 2 oder 3, **dadurch gekennzeichnet, daß** die erste Einrichtung (4) wenigstens sechs, insbesondere induktive Sender (24a, 24b, 24c, 24d, 24e, 24f) beziehungsweise als induktive Sender dienende Spulen besitzt, wobei insbesondere zwei Sender (24e, 24f) dem Innenraum (13) und/oder Laderaum (16) des Kraftfahrzeugs (1) zugeordnet sind, daß vorzugsweise die erste Einrichtung (4) weitere, je einer Autotüre (6) des Kraftfahrzeugs (1) zugeordnete Sender (24a, 24b) besitzt, daß weiter vorzugsweise die linke und/oder rechte Laderaumtür (22) einen Sender (24c, 24d) besitzt, und daß noch weiter vorzugsweise die zweite Einrichtung (5) einen induktiven Empfänger (17) besitzt.

5. Schließsystem nach einem der Ansprüche 1 bis 4, **dadurch gekennzeichnet, dass** die an der linken sowie der rechten Seite des Kraftfahrzeugs (1) befindlichen, zur Detektion der Annäherung der zweiten Einrichtung (5) an das Kraftfahrzeug (1) und/oder der Entfernung der zweiten Einrichtung (5) vom Kraftfahrzeug (1) dienenden Antennen (24c, 24d) in den Laderaumtüren (22) angeordnet sind, und dass vorzugsweise bei fehlender zweiter Einrichtung (5) die Zykluszeit für das periodische Senden des Bereichsabgrenzungssignals (10) im Verlaufe der Betriebszeit vergrößert wird, insbesondere bis hin zur vollständigen Deaktivierung für das Senden des Bereichsabgrenzungssignals (10).

6. Schließsystem nach einem der Ansprüche 1 bis 5, **dadurch gekennzeichnet, dass** die im Innenbereich (13) des Kraftfahrzeugs (1) befindlichen Antennen (24e, 24f) zur Detektion des Übergangs der zweiten Einrichtung (5) in den Innenbereich (13) und/oder des Verlassens des Innenbereiches (13) des Kraftfahrzeugs (1) für eine erweiterte Konfiguration der Antennen verwendet werden und/oder die Zykluszeit für das periodische Senden des Bereichsabgrenzungssignals (10) verändert wird.

7. Schließsystem nach einem der Ansprüche 1 bis 6, **dadurch gekennzeichnet, dass** bei Detektion der zweiten Einrichtung (5) im Innenbereich (13) und/oder im Grenzbereich des Kraftfahrzeugs (1) die Zykluszeit für das periodische Senden des Bereichsabgrenzungssignals (10) erhöht wird.

8. Schließsystem nach einem der Ansprüche 1 bis 7, **dadurch gekennzeichnet, daß** in der zweiten Einrichtung (5) ein Mittel (19) zur Messung der Feldstärke (F) des von der ersten Einrichtung (4) übertragenen Bereichsabgrenzungssignals (10) angeordnet ist, und daß vorzugsweise die Standortbestimmung anhand der gemessenen Intensitäten des Bereichsabgrenzungssignals (10) und/oder der Bereichsabgrenzungssignale (10) erfolgt.

9. Schließsystem nach einem der Ansprüche 1 bis 8, **dadurch gekennzeichnet, daß** das Mittel (19) zur Messung der Feldstärke (F), das insbesondere als integrierter Baustein ausgestaltet ist, ein in funktioneller Abhängigkeit, beispielsweise proportional oder logarithmisch, zur Feldstärke (F) stehendes RSSI(Radio Signal Strength Indicator)-Signal erzeugt, daß vorzugsweise das RSSI-Signal in der zweiten Einrichtung (5), insbesondere in einem Mikroprozessor (18), weiterverarbeitet wird, daß weiter vorzugsweise ein, gegebenenfalls variabel einschreibbarer, Schwellwert (S) in der zweiten Einrichtung (5) festgelegt ist, derart daß die RSSI-Signale der Bereichsabgrenzungssignale (10) mit dem Schwellwert (S) verglichen sowie mittels logischer, insbesondere boole'scher Verknüpfungen der Ergebnisse dieser Vergleiche der Standort bestimmt wird, daß noch weiter vorzugsweise zur Standortbestimmung der Sender (24) für das Bereichsabgrenzungssignal (10) mit unterschiedlicher Leistung angesteuert wird, und daß nochmals weiter vorzugsweise eine Art von Hysterese für das Öffnen und/oder Schließen der Laderaumtüren (22) verwendet wird.

10. Schließsystem nach einem der Ansprüche 1 bis 9, **dadurch gekennzeichnet, daß** die insbesondere als Schiebetüren ausgestalteten Laderaumtüren (22) mittels eines Elektromotors bewegbar sind, und daß vorzugsweise das Öffnen und/oder Verschließen der Laderaumtüren (22) entsprechend der KeylessEntry-Funktionalität bei Annäherung der zweiten Einrichtung (5) an das Kraftfahrzeug (1) und/oder Entfernung der zweiten Einrichtung (5) vom Kraftfahrzeug (1) elektromotorisch erfolgt.

## Claims

1. Locking system, in particular for authorizing access to a motor vehicle (1), in the manner of a keyless entry operation, with a first device (4) designed in the form of a control device with at least two states, such as a control device for unlocking and/or locking the car doors (6), the rear flap, the rear doors (23) or the like, and with an associated second device (5) designed in the form of an electronic key, an ID-sensor, a chip card or the like, wherein the two devices (4, 5) for their required operation have transmitters and/or receivers (24, 17) with aerials (24a, 24b, 24c, 24d, 24e, 24f) for in particular electromagnetic signals (7), and wherein by means of signals (7) the approach of the second device (5) to the motor vehicle (1) and/or the distancing of the second device (5) from the motor vehicle (1) and/or the change in position of the second device (5) relative to the motor vehicle (1) can be detected, **characterised in that** the first device (4) transmits at least one signal (10) in the form of a range delimitation signal, so that the second device (5) can determine its position in relation to the first device (4), in particular on and/or in the motor vehicle (1), **in that** the first device (4) in one operating mode transmits the range delimitation signal (10) periodically, **in that** in a first phase for detecting the approach of the second device (5) to the motor vehicle (1) and/or the distancing of the second device (5) from the motor vehicle (1) two aerials (24c, 24d) are used, i.e. one on the left and one on the right side of the motor vehicle (1), **in that** in a second phase for detecting the transition of the second device (5) into the inner area (13) and/or its departure from the inner area (13) of the motor vehicle (1) two aerials (24e, 24f) are used in the inner area (13) of the motor vehicle (1), and **in that** in a third phase for detecting the second device (5) in the inner area (13) and/or in the delimitation area of the motor vehicle (1) all aerials (24a, 24b, 24c, 24d, 24e, 24f) are used.

2. Locking system according to claim 1, **characterised in that** after transmitting the range delimitation signal (10) the second device (5) transmits a response signal (11) containing the location to the first device (4), and **in that** preferably a further electromagnetic signal (12) is transmitted between the second device (5) and the first device (4) as a coded operating signal for authenticating the second device (5), so that after a positive evaluation of the transmitted operating signal (12) with an authorised second device (5) a change in the state of the first device (4) can be obtained, wherein the operating signal (12) used for the authentication is transmitted preferably in a bidirectional communication consisting of several part signals between the first and the second device (4, 5).

3. Locking system according to claim 1 or 2, **characterised in that** the carrier wave for the range delimitation signal (10) has a frequency in the inductive, low frequency range, which in particular is about 20 kHz.

4. Locking system in particular according to claim 1, 2, or 3, **characterised in that** the first device (4) has at least six, in particular inductive transmitters (24a, 24b, 24c, 24d, 24e, 24f) or coils acting as inductive transmitters, wherein in particular two transmitters (24e, 24f) are assigned to the inner area (13) and/or the loading area (16) of the motor vehicle (1), **in that** preferably the first device (4) has additional transmitters (24a, 24b) each allocated to a car door (6) of the motor vehicle (1), **in that** also preferably the left and/or right loading area door (22) has a transmitter (24c, 24d), and **in that** also preferably the second device (5) has an inductive receiver (17).

5. Locking system according to one of claims 1 to 4, **characterised in that** the aerials (24c, 24d) located on the left and the right side of the motor vehicle (1) for detecting the approach of the second device (5) to the motor vehicle (1) and/or the distance of the second device (5) from the motor vehicle (1) are arranged in the loading area doors (22), and **in that** preferably if there is no second device (5) the cycle time for the periodic transmission of the range delimitation signal (10) is increased during the operating period, in particular until complete deactivation of the transmission of the range delimitation signal (10).

6. Locking system according to one of clams 1 to 5, **characterised in that** the aerials (24e, 24f) located in the inner area (13) of the motor vehicle (1) are used for detecting the transfer of the second device (5) to the inner area (13) and/or departure from the inner area (13) of the motor vehicle (1) for an extended configuration of the aerials and/or the cycle time for periodically transmitting the range delimitation signal (10) is changed.

7. Locking system according to one of claims 1 to 6, **characterised in that** on detection of the second device (5) in the inner area (13) and/or in the delimitation area of the motor vehicle (1) the cycle time for periodically transmitting the range delimitation signal (10) is increased.

8. Locking system according to one of claims 1 to 7, **characterised in that** in the second device (5) a means (19) is arranged for measuring the field strength (F) of the range delimitation signal (10) transmitted by the first device (4), and **in that** preferably the location is determined by means of the measured intensities of the range delimitation signal (10) and/or the range delimitation signals (10).

9. Locking system according to one of claims 1 to 8, **characterised in that** the means (19) for measuring the field strength (F), which is designed in particular as an integrated component, generates an RSSI (Radio Signal Strength Indicator) signal which is in functional dependency, for example proportionally or logarithmically, on the field strength (F), **in that** preferably the RSSI signal is processed in the second device (5), in particular in a microprocessor (18), **in that** also preferably a threshold value (S), which can be variable, is determined in the second device (5), such that the RSSI signal of the range delimitation signal (10) is compared with the threshold value (S) and the location is determined by means of logical, in particular Boolean operations on the results of these comparisons, **in that** also preferably to determine the location the transmitter (24) for the range delimitation signal (10) is operated with a different capacity, and **in that** also preferably a type of hystersis is used for opening and/or closing the loading area doors (22).

10. Locking system according to one of claims 1 to 9, **characterised in that** the loading area doors (22), designed in particular as sliding doors, can be moved by means of an electric motor, and **in that** preferably the opening and/or closing of the loading area doors (22) is performed by electric motor according to the keyless entry function on the approach of the second device (5) to the motor vehicle (1) and/or the distancing of the second device (5) from the motor vehicle (1).

## Revendications

1. Système de fermeture notamment pour l'autorisation d'accès à un véhicule automobile (1) à la manière d'une fonction d'ouverture sans clé, comprenant une première installation (4) réalisée comme installation de commande, ayant au moins deux états tels qu'une installation de commande pour déverrouiller et/ou verrouiller les portières (6), le volet de coffre, la portière arrière (23) d'un véhicule ou analogue, ainsi qu'une seconde installation (5) correspondante, en forme de clé électronique, d'émetteur ID, de carte à puce ou analogue,
les deux installations (4, 5) ayant pour leur fonctionnement déterminé, des émetteurs et/ou récepteurs (24, 17) avec des antennes (24a, 24b, 24c, 24d, 24e, 24f) notamment pour des signaux électromagnétiques (7) et
à l'aide des signaux (7) on détecte le rapprochement de la seconde installation (5) par rapport au véhicule automobile (1) et/ou l'éloignement de la seconde installation (5) par rapport au véhicule automobile (1) et/ou la variation de position de la seconde installation (5) par rapport au véhicule automobile (1),
**caractérisé en ce que**
- la première installation (4) émet au moins un signal (10) en forme de signal de délimitation de zone, de façon que la seconde installation (5) puisse déterminer son emplacement par rapport à la première installation (4) notamment sur et/ou dans le véhicule (1),
- dans un mode de fonctionnement, la première installation (4) émet périodiquement le signal de délimitation de zone (10),
- dans une première phase, pour détecter le rapprochement de la seconde installation (5) par rapport au véhicule (1) et/ou l'éloignement de la seconde installation (5) par rapport au véhicule (1), on utilise deux antennes (24c, 24d) à savoir une du côté gauche et une du côté droit du véhicule automobile (1),
- dans une seconde phase, pour détecter le passage de la seconde installation (5) dans la zone intérieure (13) et/ou la sortie de la zone intérieure (13) du véhicule (1), on utilise deux antennes (24e, 24f) installées dans la zone intérieure (13) du véhicule (1) et
- dans une troisième phase, pour détecter la seconde installation (5) dans la zone intérieure (13) et/ou dans la zone limite du véhicule automobile (1), on utilise toutes les antennes (24a, 24b, 24c, 24d, 24e, 24f).

2. Système de fermeture selon la revendication 1,
**caractérisé en ce qu'**
après l'émission du signal de délimitation de zone (10), ensuite la seconde installation (5) émet un signal de réponse (11) contenant l'emplacement vers la première installation (4) et
de préférence un autre signal électromagnétique (12) est transmis entre la seconde installation (5) et la première installation (4) sous la forme d'un signal de fonctionnement codé pour authentifier la seconde installation (5) de façon qu'après exploitation positive du signal de fonctionnement (12), transmis, la seconde installation étant autorisée (5), une modification de l'état de la première installation (4) est produite,
le signal de fonctionnement (12) servant d'authentification, étant transmis de manière préférentielle suivant une communication bidirectionnelle composée de plusieurs signaux partiels échangés entre la première et la seconde installation (4, 5).

3. Système de fermeture selon la revendication 1 ou 2,
**caractérisé en ce que**
la porteuse du signal de délimitation de zone (10) a une fréquence située dans la plage inductive basse fréquence (BF) qui est notamment d'environ 20 kHz.

4. Système de fermeture selon les revendications 1, 2 ou 3,
**caractérisé en ce que**
la première installation (4) comporte au moins six émetteurs (24a, 24b, 24c, 24d, 24e, 24f) notamment inductifs ou des bobines servant d'émetteurs inductifs,
notamment deux émetteurs (24e, 24f) étant associés à la zone intérieure (13) et/ou à l'espace de chargement (16) du véhicule automobile (1) et **en ce que** de préférence la première installation (4) comporte d'autres émetteurs (24a ; 24b) associés chacun à une portière (6) du véhicule automobile (1), et **en ce qu'**en outre de manière préférentielle, la porte de l'espace de chargement (22), gauche et/ou droite, comporte un émetteur (24c, 24d) et **en ce qu'**en outre, de manière préférentielle, la seconde installation (5) comporte un récepteur inductif (17).

5. Système de fermeture selon l'une des revendications 1 à 4,
**caractérisé en ce que**
les antennes (24c, 24d) prévues sur le côté gauche et le côté droit du véhicule automobile (1), servant à la détection du rapprochement de la seconde installation (5) par rapport au véhicule (1) et/ou de l'éloignement de la seconde installation (5) par rapport au véhicule automobile (1), sont installées dans les portières de l'espace de chargement (22) et
de préférence en cas d'absence de seconde installation (5), le temps du cycle pour l'émission périodique du signal de délimitation de zone (10) est augmenté pendant le temps de fonctionnement notamment jusqu'à la neutralisation totale pour l'émission du signal de délimitation de zone (10).

6. Système de fermeture selon l'une des revendications 1 à 5,
**caractérisé en ce que**
les antennes (24e, 24f) qui se trouvent dans le volume intérieur (13) du véhicule automobile (1), pour détecter le passage de la seconde installation (5) dans la zone intérieure (13) et/ou la sortie de la zone intérieure (13) du véhicule automobile (1) sont utilisées pour une configuration étendue des antennes et/ou le temps du cycle est modifié pour émettre périodiquement le signal de limitation de fonctionnement (10).

7. Système de fermeture selon l'une des revendications 1 à 6,
**caractérisé en ce que**
pour la détection de la seconde installation (5) dans la zone intérieure (13) et/ou dans la zone limite du véhicule automobile (1), on augmente la durée du cycle pour l'émission périodique du signal de délimitation de zone (10).

8. Système de fermeture selon l'une des revendications 1 à 7,
**caractérisé en ce que**
la seconde installation (5) comporte des moyens (19) pour mesurer l'intensité (F) du champ du signal de délimitation de zone (10) transmis par la première installation (4) et
**en ce que** de préférence la localisation se fait à l'aide de l'intensité mesurée du signal de délimitation de zone (10) et/ou de celle des signaux de délimitation de zone (10).

9. Système de fermeture selon l'une des revendications 1 à 8,
**caractérisé en ce que**
le moyen (19) pour mesurer l'intensité du champ (F), notamment réalisé comme composant intégré, génère un signal RSSI (Radio Signal Strengh Indicator) en relation fonctionnelle, par exemple proportionnelle, ou logarithmique, avec l'intensité du champ (F),
de préférence le signal RSSI est ensuite traité dans la seconde installation (5) notamment dans un microprocesseur (18),
**en ce qu'**
ensuite de préférence un seuil (S) le cas échéant variable, inscriptible, est fixé dans la seconde installation (5) de façon que les signaux RSSI des signaux de limitation de zone (10) soient comparés au seuil (S) et avec des combinaisons logiques notamment, en logique de Boole, on détermine les résultats de ces comparaisons de l'emplacement, et de façon plus préférentielle pour déterminer l'emplacement, l'émetteur (24) pour le signal de limitation de zone (10) est commandé avec une puissance différente, et
**en ce qu'**
en plus notamment, on utilise une sorte d'hystérésis pour ouvrir et/ou fermer les portières de l'espace de chargement (22).

10. Système de fermeture selon l'une des revendications 1 à 9,
**caractérisé en ce que**
les portières d'espace de chargement (22) notamment réalisées comme portières coulissantes, sont commandées par un moteur électrique et de préférence l'ouverture et/ou la fermeture des portières de l'espace de chargement (22) se font selon la fonction d'entrée sans clé lorsqu'on se rapproche de la seconde installation (5) du véhicule automobile (1) et/ou lorsqu'on éloigne la seconde installation (5) du véhicule automobile (1) par un moteur électrique.
